# EUROPÄISCHE PATENTSCHRIFT

(11) **EP 0 819 101 B1**
(45) Veröffentlichungstag und Bekanntmachung des Hinweises auf die Patenterteilung: **16.12.1998**
(21) Anmeldenummer: 96908005.0
(22) Anmeldetag: 27.03.1996
(51) Int. Cl.: C02F 11/08, B01J 10/00

(54) **ANLAGE UND VERFAHREN ZUR OXIDATION EINES WÄSSRIGEN MEDIUMS**
PLANT AND PROCESS FOR OXIDIZING AN AQUEOUS MEDIUM
INSTALLATION ET PROCEDE D'OXYDATION D'UNE SUBSTANCE AQUEUSE

(30) Priorität: 05.04.1995 SI 9500109
(43) Veröffentlichungstag der Anmeldung: 21.01.1998
(73) Patentinhaber: MANNESMANN Aktiengesellschaft, 40213 Düsseldorf (DE); K.T.I. Group B.V., NL-2700 AB Zoetermeer (NL)
(72) Erfinder: LEVEC, Janez, 61000 Ljubljana (SI)
(74) Vertreter: Henze, Lothar
(86) Internationale Anmeldenummer: DE9600592
(87) Internationale Veröffentlichungsnummer: WO9631442

(56) Entgegenhaltungen:
- EP-A- 0 132 224
- EP-A- 0 346 095
- DE-A- 3 316 265

## Beschreibung

Die Erfindung betrifft eine Anlage und ein Verfahren zur Oxidation eines wäßrigen Mediums gemäß dem Oberbegriff des Patentanspruchs 1.

Die Naßoxidation ist eine in wäßriger Phase ablaufende Oxidation von organischen und anorganischen Stoffen, die in einem wäßrigen Medium gelöst oder suspendiert sind, wobei dieser Prozeß bei erhöhter Temperatur und erhöhtem Druck in Anwesenheit von Sauerstoff stattfindet, der in Form eines molekularen Sauerstoff oder Ozon enthaltenden Gases (z. B. Luft) oder einer Sauerstoff abgebenden Lösung (z. B. Wasserstoffperoxid) zugeführt werden kann. Der Zweck der Naßoxidation ist in einer Verminderung des chemischen Sauerstoffbedarfes (COD) des wäßrigen Mediums zu sehen. Im Hinblick auf das erfolgreiche Betreiben einer Naßoxidation sind zwei wesentliche Vorgänge zu beachten.

Der erste Vorgang ist in einem kontinuierlichen Übergang des Sauerstoffs von der gasförmigen in die flüssige Phase zu sehen (Massenübergang). Eine ausreichende Sauerstoffkonzentration in der flüssigen Phase muß zu jeder Zeit aufrechterhalten werden, damit die Reaktion der Naßoxidation vor sich gehen kann. Die Bedeutung des kontinuierlichen Übergangs des Sauerstoffs von der gasförmigen in die flüssige Phase wird am besten klar, durch den Vergleich der Gleichgewichtskonzentration von Sauerstoff in reinem Wasser bei Temperaturen und Drücken, wie sie bei der Naßoxidation üblich sind, mit einem typischen COD-Wert eines durch Naßoxidation zu behandelnden wäßrigen Mediums: Die Gleichgewichtskonzentration beträgt weniger als 1/g/l, während der typische COD-Wert im Bereich von 30 bis 100/g/l liegt. Das bedeutet, daß in einem Naßoxidationssystem normalerweise eine Sauerstoffmenge, die wenigstens 30 mal so groß ist wie die Gleichgewichtsreaktion, von der Gasphase in die flüssige Phase übergehen muß, um die gewünschte COD-Reduzierung zu erhalten. Ein effizientes Naßoxidationssystem muß daher ständig eine große Zone für den Gas/Flüssigkeit-Übergang und hohe Gas/Flüssigkeit-Übergangskoeffizienten im gesamten Reaktorvolumen aufrechterhalten. Mittel zum effizienten Dispergieren, das heißt zum Brechen und Verteilen von Gasbläschen im gesamten Reaktorvolumen sind daher von zentraler Bedeutung in einem Naßoxidationssystem. Wenn das nicht der Fall ist, können sich mit Sauerstoff unterversorgte Zonen innerhalb des Naßoxidationsreaktors bilden, insbesondere wenn die Oxidationsreaktion schnell abläuft und somit den gelösten Sauerstoff schnell verbraucht. Da die Naßoxidation nicht in mit Sauerstoff unterversorgten Zonen abläuft, wirkt sich dies in einer Reduzierung des effektiven Reaktorvolumens aus.

Der zweite wichtige Vorgang, der zu beachten ist, ist die innewohnende Kinetik der Oxidationsreaktion selbst. Die Oxidationsrate ist, wie in der Literatur berichtet wird (vgl. Li et al., AIChE Journal, Vol. 37, No. 11, 1991, S. 1687 - 1697), in erster Ordnung abhängig sowohl von der Konzentration des gelösten organischen und des oxidierbaren anorganischen Materials wie auch von der Konzentration des gelösten Sauerstoffs. Für den Fachmann ist es leicht verständlich, daß die positive Ordnung der Oxidationskinetik die Verwendung von Reaktoren mit einem niedrigen Rückvermischungsgrad erfordert. Im Falle der Naßoxidation ist der Grad der Rückvermischung in der flüssigen Phase besonders wichtig, da es die flüssige Phase ist, in der organisches und oxidierbares anorganisches Material vorhanden ist und in der die Oxidationsreaktion stattfindet. Ein niedriger Rückvermischungsgrad wirkt sich dadurch aus, daß ein kleineres Gesamtvolumen des Reaktors erforderlich ist, um den gewünschten Oxidationsgrad des besagten organischen und oxidierbaren anorganischen Materials zu erzielen.

Zusammenfassend ist zu sagen, daß ein effizienter Gas/Flüssigkeit-Massenübergang (gasförmiger Sauerstoff in die wäßrige Phase) in einem Reaktor, der mit einem niedrigen Grad der Rückvermischung in der flüssigen Phase betrieben wird, einen kleineren, kompakteren Oxidationsreaktor ermöglicht, um einen gewünschten COD-Wert zu erreichen. Angesichts des hohen Drucks bei der Naßoxidation stellt dies einen bemerkenswerten Vorteil im Vergleich zu weniger effizienten Systemen dar.

Ein relativ effektives System für den Gas/Flüssigkeit-Übergang ist in der US 3 870 631 vorgeschlagen worden. In dieser Schrift wird die Anwendung eines starken Mischens beschrieben, um einen effizienten Kontakt zwischen der wäßrigen Phase und der Sauerstoff enthaltenden gasförmigen Phase zu erreichen. Das Mischen wird erreicht durch schnell rotierende Rührwerke, die von der Außenseite des Reaktors angetrieben werden. Der Energieverbrauch und Schwierigkeiten bei der Abdichtung der Antriebswellen sind wesentliche Nachteile dieses Systems.

In der US 4 793 919 wird eine weniger Energie verbrauchende Alternative beschrieben, die einen Apparat vorsieht, der eine Pumpe zur Zirkulierung der wäßrigen Suspension des zu oxidierenden Materials durch eine Anordnung von statischen Mischern beinhaltet. Die statischen Mischer umfassen eine Vielzahl von Leitvorrichtungen, die in der Reaktionszone angeordnet sind. Neben dieser Reaktionszone weist der Apparat auch eine Zone zur internen Rezirkulation der Mischung auf. In dieser Rezirkulationszone besteht ein wesentlich weniger intensives Massenübergangsregime (Gas/Flüssigkeit), da sie keinerlei statische Mischeinrichtungen enthält. Die interne Zirkulation der Mischung wird aufrechterhalten durch die Pumpe und die Auftriebskräfte, die entstehen durch Einleitung von Sauerstoff enthaltendem Gas in eine Zone des Reaktors, die abgetrennt ist von derjenigen, in der die wäßrige Suspension eingeführt wird.

In beiden vorstehend beschriebenen Systemen verursacht das intensive Mischen oder die interne Rezirkulation, die erforderlich sind, um die Charakteristik des Massenübergangs des Systems zu verbessern, unvermeidlich einen hohen Grad an Rückvermischung in der wäßrigen Phase, was wiederum sich in einem großen Reaktorvolumen auswirkt, das für eine gewünschte Reduzierung des COD-Wertes erforderlich ist. Die Lösung dieser Problematik wurde bisher gewöhnlich darin gesehen, daß zwei oder mehr Reaktoren mit einem hohen Grad an Rückvermischung in Serie hintereinander geschaltet wurden. In den beiden zuvor genannten Patentschriften wird eine solche Anordnung ebenfalls vorgeschlagen.

Aufgabe der Erfindung ist es, eine Anlage und ein Verfahren zur Oxidation des wäßrigen Mediums, das organische und/oder oxidierbare anorganische Stoffe enthält, vorzuschlagen, wobei für eine Reduzierung des COD-Wertes auf einen vorgegebenen Grenzwert ein möglichst kleines Reaktionsraumvolumen erforderlich sein sollte. Gelöst wird diese Aufgabe erfindungsgemäß hinsichtlich der Anlage mit den Merkmalen des Patentanspruchs 1. Vorteilhafte Weiterbildungen dieser Anlage sind durch die Merkmale der Unteransprüche 2 bis 25 gekennzeichnet. Ein erfindungsgemäßes Verfahren weist die Merkmale des Patentanspruches 26 auf und ist durch die Merkmale der Unteransprüche 27 bis 38 in vorteilhafter Weise weiter ausgestaltbar.

Die Nachteile der Verfahren und Vorrichtungen gemäß dem Stand der Technik lassen sich durch die vorliegende Erfindung weitestgehend vermeiden. Für den Fachmann ist verständlich, daß bei einem Prozeß mit einer Kinetik positiver Ordnung das gesamte Reaktorvolumen bei einer Serie gut gemischter Reaktoren deutlich niedriger ist, als das Volumen eines einzelnen gut gemischten Reaktors, der dieselbe Leistung bietet. Im Falle der Naßoxidation führt aber selbst eine serielle Anordnung gut gemischter Reaktoren immer noch zu einem sehr großen Gesamtreaktorvolumen. Angenommen, eine Naßoxidation (eine irreversible Reaktion (pseudo) erster Ordnung) wird in einem Reaktor mit sehr hohem Rückvermischungsgrad ausgeführt, z. B. in einem kontinuierlich gerührten Reaktor (CSTR). Weiterhin angenommen, daß der COD-Wert des Eingangstroms einem typischen Wert von 70 g/l entspricht und daß die Verweilzeit (d. h. das Volumen des Reaktors) so gewählt ist, daß 90 % des COD-Wertes (d. h. 63 g/l) in dem Reaktor abgebaut werden. Dann beträgt der COD-Wert des Effluents 7 g/l. Danach wird dieses Effluent in einen weiteren, völlig gleichartig betriebenen Reaktor bei gleicher Temperatur und gleichem Druck geführt. Wiederum sollen 90 % des COD-Wertes im zweiten Reaktor abgebaut werden(d. h. 6,3 g/l), so daß der COD-Wert des Effluents 0,7 g/l beträgt. In beiden Fällen wird jeweils eine Reduktion des COD-Wertes des Eingangstroms um 90 % erreicht. Im Fall des ersten Reaktors werden jedoch 63 g/l an Sauerstoff benötigt, im Fall des zweiten Reaktors aber nur ein Zehntel dieses Wertes. Es ist somit klar, daß im zweiten Reaktor nur ein wesentlich weniger intensives Massenübergangsregime von der Gas- zur Flüssigkeitsphase erforderlich ist. Gemäß den vorstehend genannten Ausführungen kann ein solches weniger intensives Massenübergangsregime erreicht werden in einem Reaktor mit einem geringen Grad an Rückvermischung. Folglich kann der zweite Reaktor deutlich kleiner sein, ohne daß eine Leistungseinbuße hingenommen werden muß. Für das obige Beispiel bedeutet dies, daß das erforderliche Reaktorvolumen des zweiten Reaktors, wenn der erste Reaktor z. B. vom Typ CSTR oder ein ähnlicher (mit maximalen Rückvermischungsgrad) ist und der zweite Reaktor keinerlei Rückvermischung in der wäßrigen Phase hat (Reaktor mit Pfropfenströmung), ungefähr nur ein Viertel des Volumens des ersten Reaktors beträgt. Das Ergebnis ist somit ein kleineres, kompakteres System.

Für den Fachmann ist es einsehbar, daß ähnliche Schlußfolgerungen auch bei einer Serie von mehr als zwei hintereinandergeschalteten Reaktoren gezogen werden können. Ähnlich wie bei einer Serie von zwei Reaktoren sind bei einer Serie von noch mehr Reaktoren immer weniger strenge Bedingungen des Massenübergangs erforderlich, je weiter sich der COD-Wert des durch die Reaktoren fließenden wäßrigen Mediums vermindert. Diese weniger strengen Bedingungen erfordern einen niedrigeren Grad der Rückvermischung, woraus im Gegenzug ein wesentlich kleineres Gesamtreaktorvolumen resultiert als im Fall einer Serie von gleichen, stark gemischten Reaktoren.

Es ist dem Fachmann auch bekannt, daß in der Praxis jeder chemische Reaktor einen gewissen Grad an Rückvermischung aufweist. Ein Blasensäulenreaktor mit gleichlaufendem Gas/Flüssigkeitsaufstrom, ein einfacher und häufig für Gas/Flüssigkeitsreaktionen einschließlich der Naßoxidation genutzter Reaktor, weist einen ganz signifikanten Grad an Rückvermischung in der flüssigen Phase auf. Diese Rückvermischung wird hauptsächlich verursacht durch die interne Rezirkulation der flüssigen Phase, d. h. durch eine lokale Aufwärtsströmung der Flüssigkeit. Das Ausmaß dieser internen Rezirkulation hängt ab von vielen Faktoren wie etwa von der Geometrie der Reaktorkolonne (die Rezirkulation tritt z. B. wesentlich stärker auf in Kolonnen mit großem Durchmesser/Längen-Verhältnis), von den Eigenschaften des Fluids und auch von den Betriebsbedingungen wie etwa die Gas- und Flüssigkeitsdurchflußraten. Ein anderer Nachteil eines typischen Blasensäulenreaktors ist die sog. Bachbildung (bypassing) der Reaktionsmischung, die leicht in einer Zone nahe dem Zentrum der Kolonne auftritt. Blasensäulenreaktoren sind daher aus diesem Grunde häufig ausgerüstet mit seitlichen Leitblechen, die aus mehr oder weniger flachen, relativ dünnen Platten bestehen und im wesentlichen im rechten Winkel zur Strömungsrichtung angeordnet sind.

Die seitlichen Leitbleche können aber nicht nur die Bachbildung (bypassing) minimieren; sie können auch die Rezirkulation der flüssigen Phase im Blasensäulenreaktor signifikant reduzieren. Gewöhnlich genutzte Leitbleche in Form von Scheiben und Ringen (disc and donut) können, wenn sie zweckmäßig dimensioniert und positioniert sind, die Abwärtsströmung der flüssigen Phase sehr effektiv verhindern und daher die Rückvermischung im Blasensäulenreaktor deutlich reduzieren. Bei Kolonnen mit großem Durchmesser/Längen-Verhältnis kann durch Anwendung von Längsblechen die im wesentlichen parallel zur Durchflußrichtung angeordnet werden und sich praktisch über die gesamte Länge der Kolonne erstrecken, das äquivalente Durchmesser/Längen-Verhältnis reduziert und somit die interne Rezirkulation und folglich der Grad der Rückvermischung in der Kolonne vermindert werden. Die Anwendung von zweckmäßig dimensionierten und positionierten Leitblechen kann daher die Leistung des Blasensäulenreaktors für Reaktionen positiver Ordnung signifikant verbessern.

Zusätzlich zur verminderten Vermischung führen die ständigen Kollisionen zwischen den seitlichen Leitblechen und der aufströmenden Mischung des wäßrigen Mediums und der Bläschen des Sauerstoff enthaltenden Gases zur Bildung einer effizienten Dispersion, d. h. zum Aufbrechen und Vermischen der Bläschen des Sauerstoff enthaltenden Gases. Die Effektivität der Dispersion hängt von verschiedenen Faktoren ab, z. B. von der Form und der Dimensionierung der Leitfläche und deren Positionierung, vom Durchmesser der Kolonne, von der Eigenschaften des Fluids und speziell von der Intensität der Kollisionen zwischen der strömenden Mischung und den Leitblechen. Die Intensität der Kollisionen hängt vornehmlich von der Geschwindigkeit der strömenden Mischung relativ zu den Leitblechen ab. Für ein bestimmtes Reaktorvolumen hängt die Geschwindigkeit der ausströmenden Mischung ab von der erforderlichen Verweilzeit, um eine gewünschte Reduzierung des COD-Wertes zu erhalten. Die Geschwindigkeit kann erhöht werden durch Rückführung eines Teils des Reaktoreffluents zum Einlaß des Reaktors. Auf diese Weise kann ein beträchtlicher Anstieg der Geschwindigkeit der Mischung relativ zu den Leitblechen erreicht werden.

Dem Fachmann ist bekannt, daß die Rückführung eines Teils des Reaktoreffluents zum Einlaß des selben Reaktors einen größeren Grad der Rückvermischung im Reaktor bewirkt. Dieser Anstieg hängt in erster Linie ab von dem Anteil des Reaktoreffluents, der zurückgeführt wird. Eine wichtige Schlußfolgerung ist in diesem Zusammenhang jedoch, daß durch Variierung des Anteils des rezyklierten Effluents der Grad der Rückvermischung und auch die Intensität der Interaktionen zwischen der aufströmenden Mischung und den Leitblechen in optimaler Weise an die jeweils gegebene besondere Situation angepaßt werden können. Diese Möglichkeit der Feineinstellung der Betriebsbedingungen bewirkt eine deutliche Reduzierung des Reaktorvolumens.

Für den Fachmann ist es selbstverständlich, daß die Steuerung der Rückvermischung in der flüssigen Phase und die gleichzeitige Bereitstellung einer effizienten Mischung aus Bläschen des Sauerstoff enthaltenden Gases und der wäßrigen Phase auch erreicht werden können durch Benutzung von anderen Reaktoreinbauten als die erwähnten seitlichen und longitudinalen Leitbleche. Z. B. können Drahtnetze oder perforierte Platten, deren Durchmesser im wesentlichen der gleiche ist wie der Innendurchmesser der Kolonne und die im wesentlichen parallel zueinander und etwa rechtwinklig zur Längsachse der Kolonne angeordnet sind, die gleiche Funktion erfüllen wie seitliche Leitbleche. Bei Kolonnen mit großem Durchmesser/Längen-Verhältnis können Drahtnetze und perforierte Platten auch kombiniert werden mit den zuvor beschriebenen Längsblechen. Unterschiedliche Typen von statischen Mischern, die speziell für die Gas/Flüssigkeit-Mischung entwickelt wurden, stellen eine weitere Alternative für Reaktoreinbauten dar, die sowohl seitliche als auch longitudinale Leitbleche vorteilhaft ersetzen können. Beispielsweise erzeugen die dreidimensionalen Strukturen eines von Sulzer entwickelten statischen Mischers eine effiziente Dispersion aus den Bläschen des Sauerstoff enthaltenden Gases und der wäßrigen Phase und reduzieren gleichzeitig die Rückvermischung in der flüssigen Phase beträchtlich. Es versteht sich, daß auch andere Typen von Einbauten möglich sind, ohne das Wesen vorliegenden Erfindung zu verlassen. In diesem Zusammenhang ist auch die Verwendung von Rührwerken zu nennen, wie sie aus dem Stand der Technik bekannt sind. Eine effiziente Dispersion läßt sich auch dadurch erzeugen, daß die Rezyklierungsschleife, mit der ein Teil des Effluents zurückgeführt wird, als Ejektor in den Reaktor mündet und zumindest ein Teil des Sauerstoff enthaltenden Gases durch diesen Ejektor eingeführt wird. Man kann auch den Flüssigkeitsstrahl der Rezyklierungsschleife gegen den Strahl des eingedüsten Sauerstoff enthaltenden Gases richten und auf diese Weise eine Zerteilung des Gases in feinste Gasbläschen bewirken.

Die Auswahl des oder der Typen der Reaktoreinbauten für eine spezifische Anwendung hängt von verschiedenen Faktoren ab. Die beiden wichtigsten Faktoren sind die erforderliche Leistung und die Zusammensetzung des wäßrigen Mediums. Beispielsweise sollte die Anwendung von Einbauten, die zum Verstopfen neigen wie etwa Drahtnetze oder einige Typen von statischen Mischern, unterbleiben, wenn in dem wäßrigen Medium Feststoffteilchen suspendiert sind.

Ein wesentliches Kennzeichen der vorliegenden Erfindung ist es, daß die Oxidation des wäßrigen Mediums in einem Reaktor durchgeführt wird, der in mehrere Reaktoren unterteilt ist, die nachfolgend auch als Sektionen bezeichnet werden. Dabei werden die einzelnen Sektionen so betrieben, daß der Grad der Rückvermischung einer Sektion jeweils höchstens genauso groß ist, wie der jeweilige Grad der Rückvermischung in den relativ zu dieser Sektion stromaufwärts gelegenen Sektionen. Die am weitesten stromabwärts gelegene (letzte) Sektion weist in jedem Fall einen Rückvermischungsgrad auf, der kleiner ist als derjenige der am weitesten stromaufwärts gelegenen (ersten) Sektion. Vorzugsweise nimmt der Rückvermischungsgrad in Stromrichtung von Sektion zu Sektion ab. Die einzelnen Sektionen können in separaten Gehäusen untergebracht sein, die durch entsprechende Rohrleitungen miteinander verbunden sind. Im Falle eines gemeinsamen Gehäuses für mehrere Sektionen empfiehlt es sich, diese durch Separatoren z. b. in Form von Wabenelementen (honeycomb), Drahtgitterböden oder Lochplatten voneinaner zu trennen, wobei die Separatoren einen freien Massentransfer aber nur eine begrenzte Übertragung von Drehströmungen zulassen sollen.

Nachfolgend wird die Erfindung anhand der in den Figuren dargestellten
Ausführungsbeispiele wieder näher erläutert. Es zeigen:
- Figur 1: einen Reaktor mit Recyclingschleife und zwei Sektionen mit einem gemeinsamen Gehäuse,
- Figur 2: einen Reaktor mit zwei Sektionen in separaten Gehäusen,
- Figur 3: einen Reaktor mit Trennwänden in Längsrichtung,
- Figur 4: einen Kombieinlaß mit Verteiler,
- Figur 5: zwei Ausführungsformen von seitlichen Leitblechen,
- Figur 6: einen Reaktor mit zwei Sektionen und gegeneinander gerichteten Zuführungen für Sauerstoff und wäßriges Medium,
- Figur 7: ein Reaktor mit zwei Sektionen und Injektor in der ersten Sektion,
- Figur 8: einen Reaktor mit zwei Sektionen und außen angeordnetem statischen Mischer im Einlaßbereich,
- Figur 9: einen Reaktor mit zwei Sektionen und im Inneren angeordnetem statischen Mischer im Einlaßbereich,
- Figur 10 - 12: schematische Längsschnitte durch Reaktoren mit motorisch angetriebenem Mischer in der ersten Sektion und
- Figur 13: schematische Ansicht eines Reaktors mit drei Sektionen in separaten Gehäusen.

In den Figuren sind funktionsgleiche Teile jeweils mit den gleichen Bezugszeichen versehen.

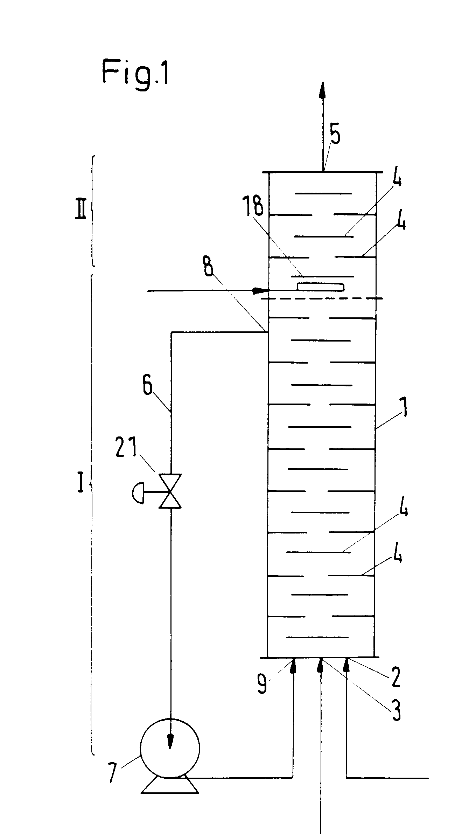

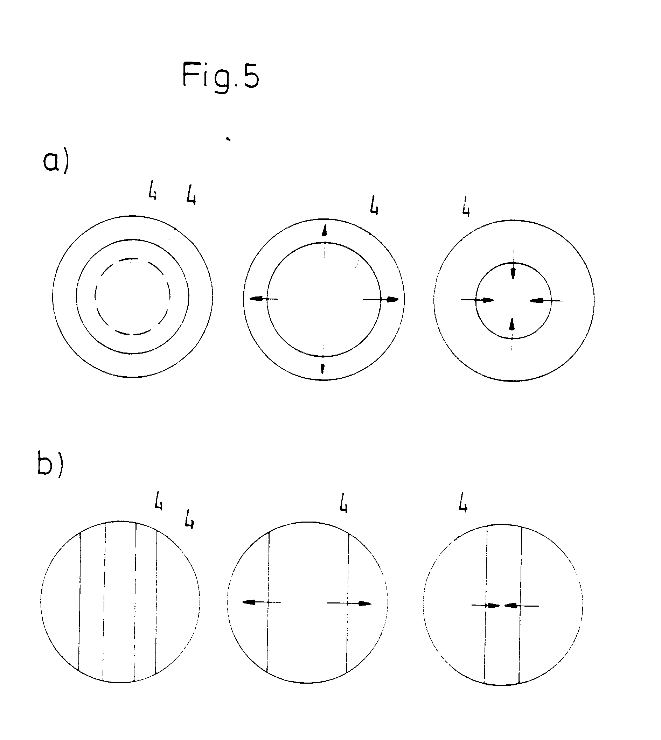

In dem in Figur 1 als Längsschnitt dargestellten erfindungsgemäßen Reaktor 1 zur Oxidation eines wäßrigen Mediums, das organische und/oder oxidierbare anorganische Stoffe enthält, bei erhöhter Temperatur und erhöhtem Druck, wird das wäßrige Medium Sauerstoff ausgesetzt, um den chemischen Sauerstoffbedarf des wäßrigen Mediums auf ein vorgegebenes gewünschtes Niveau zu reduzieren. Dieser Reaktor 1 weist zwei miteinander verbundene Sektionen I, II auf, die in einem gemeinsamen, vorzugsweise vertikal aufgestellten zylindrischen Gehäuse untergebracht sind. Der Einlaß für das frische zu behandelnde wäßrige Medium ist mit 2 bezeichnet und ist ebenso wie der Einlaß 3 für das Sauerstoff enthaltende Gas (z. B. Luft, Sauerstoff angereicherte Luft, reiner Sauerstoff oder Ozon) in der ersten, also in der am weitesten stromaufwärts gelegenen Sektion I angeordnet. Vorzugsweise befinden sich die Einlässe 2, 3 im Bodenbereich des Rohrreaktors 1 oder in dessen Nähe. Ein Auslaß 5 für das behandelte Medium ist zweckmäßigerweise an der Spitze der am weitesten stromabwärts liegenden (letzten) Sektion II angeordnet. Die erste Sektion I ist gemäß einer vorteilhaften Ausgestaltung der Erfindung mit einer Recycling-Schleife 6 versehen, durch die ein Teil der von unten nach oben durch die Sektion I geführten Suspension aus dem zugeführten wäßrigen Medium und dem zugeführten Sauerstoff enthaltenden Gas (und/oder einer Sauerstoff freisetzenden Lösung wie etwa Sauerstoffperoxid) aus dem Bereich des Übergangs von der Sektion I zur Sektion II wieder zum Eingang der Sektion I zurückgeführt werden kann. Der Auslaß der Recyclingschleife 6 ist mit 8 und ihr Einlaß in den Reaktor mit 9 bezeichnet. Der Recyclierungsstrom wird durch eine Pumpe 7 aufrecht erhalten und ist in seiner Menge durch ein entsprechendes Ventil 21 einstellbar. In beiden Sektionen I, II sind Mittel 4 zum Dispergieren der Bläschen des Sauerstoff enthaltenden Gases angeordnet, die in Form von seitlichen Leitblechen ausgebildet sind, die quer zu der von unten nach oben gerichteten Strömung der Mischung des wäßrigen Mediums und des gasförmigen Sauerstoffs stehen. Auf diese Weise kommt es fortlaufend zu Kollisionen dieser Mischung mit den Leitblechen, so daß sich die enthaltenen Gasbläschen fein zerteilen und der Massenübergang des Sauerstoffs in die wäßrige Phase (d. h. das Lösen des Sauerstoffs) begünstigt wird. Zweckmäßige Ausführungsformen für derartige seitliche Leitbleche sind in Figur 5 dargestellt. Dabei zeigt die Figur 5 a eine Form aus abwechselnd im Abstand übereinander angeordneten Scheiben und Ringen aus dünnem Blech, während in Figur 5 b eine andere Variante dargestellt ist, bei der abwechselnd in den Leitblechen Schlitze an den Seiten oder im Mittelbereich vorgesehen sind. Hierdurch wird die Aufströmung in entsprechender Weise immer wieder geteilt und wieder zusammengeführt. Gegenüber einem Reaktor ohne seitliche Leitbleche wird der Grad der Rückvermischung in der flüssigen Phase reduziert. Auf der anderen Seite erhöht sich der Rückvermischungsgrad aber durch die Recyclingschleife 6. Diese gestattet es jedoch, die Strömungsgeschwindigkeit in der Sektion I so hoch einzustellen, daß eine effektive Suspendierung der Gasbläschen erreicht werden kann, ohne daß die erforderliche Verweilzeit des wäßrigen Mediums in dieser Sektion I zur Erzielung der gewünschten Reduzierung des COD-Wertes unterschritten wird. Im Übergangsbereich von der Sektion I zur Sektion II ist in zweckmäßiger Ausgestaltung der Erfindung ein Separator 17 angeordnet, der die beiden unmittelbar benachbarten Sektionen I, II voneinander in dem Sinne trennt, daß zwar ein freier Massentransfer zwischen den beiden Sektionen aber nur eine begrenzte Drehimpulsübertragung mit der Strömung stattfindet. Die Strömung im Übergangsbereich der beiden Sektionen I, II ist also nur vertikal nach oben (oder ggf. auch nach unten) gerichtet; alle anderen Strömungsrichtungen werden weitestgehend unterdrückt. Der Separator 17 besteht zweckmäßig aus einer oder mehreren Lochplatten, deren Löcher gleichmäßig verteilt sind und einen Durchmesser aufweisen, der nur einen kleinen Bruchteil des Innendurchmessers des Rohrreaktors 1 ausmacht. Alternativ kann der Separator 17 auch beispielsweise aus einem oder mehreren Drahtgitterböden bestehen, deren Maschenweite nur einen kleinen Bruchteil des Innendurchmessers des Rohrreaktors 1 ausmacht. Der Außendurchmesser des Separators 17 ist etwa gleich groß wie der Innendurchmesser des Rohrreaktors 1. Durch den Separator 17 lassen sich in den einzelnen Sektionen I, II jeweils unterschiedliche Durchflußverhältnisse einstellen. Im vorliegendem Fall wird in Sektion I eine sehr intensive Durchmischung der Strömungen erzeugt, während in der oberen Sektion II eine relativ gleichförmige Aufströmung vorliegt. Bei der Verwendung mehrerer Lochplatten oder Drahtgitterböden als Separator 17 sollten diese parallel zueinander in einem Abstand voneinander von nicht mehr als 20 cm angeordnet sein. In manchen Fällen ist es vorteilhaft, als Separatoren 17 Wabenelemente (honeycomb) einzusetzen, wobei die Dimensionierung und Anordnung in entsprechender Weise wie bei Lochplatten oder Drahtgitterböden erfolgen soll. Als Separator 17 kommen aber auch statische Mischer in Frage, deren Durchmesser im wesentlichen gleich groß ist wie der Innendurchmesser des Rohrreaktors I und deren Dicke relativ zu ihrem Durchmesser klein ist und die im wesentlichen im rechten Winkel zur Reaktorlängsachse gerichtet sind. Das in Figur 1 dargestellte Ausführungsbeispiel weist auch in der Sektion II gleichartige oder ähnliche Mittel 4 zum Dispergieren von Bläschen des sauerstoffhaltigen Gases und zur Reduzierung der Rückvermischung der wäßrigen Phase auf. Selbstverständlich können in den Sektionen I und II auch jeweils unterschiedliche Mittel 4 zum Dispergieren eingebaut sein. Bemerkenswert ist noch, daß am Anfang der Sektion II, also an derem unteren Ende in vorteilhafter Weiterbildung der Erfindung ein zusätzlicher Einlaß 18 für die Einleitung von Sauerstoff enthaltenden Gas oder einer Sauerstoff freisetzenden Lösung angeordnet ist. Dies verbessert die Möglichkeit zur Sauerstoffaufnahme durch die flüssige Phase.

Wesentlich für die Erfindung ist es, daß der Grad der Rückvermischung in der wäßrigen Phase in der Sektion II deutlich kleiner ist, als in der Sektion I, da die Sektion II keine Recyclingschleife aufweist. Da die erforderliche Leistung in der Reduzierung des COD-Wertes der wäßrigen Phase in der Sektion II wesentlich kleiner ist, als in Sektion I, kann die Verweilzeit des wäßrigen Mediums in der Sektion II entsprechend kürzer gehalten werden. Aus diesem Grund ist das Behältervolumen der Sektion II deutlich kleiner als im Fall der Sektion I. Durch die Regulierung des Recyclierungsstromes ist der Rückvermischungsgrad der Sektion I in weiten Grenzen veränderbar und kann somit optimal auf den jeweiligen Bedarfsfall eingestellt werden.

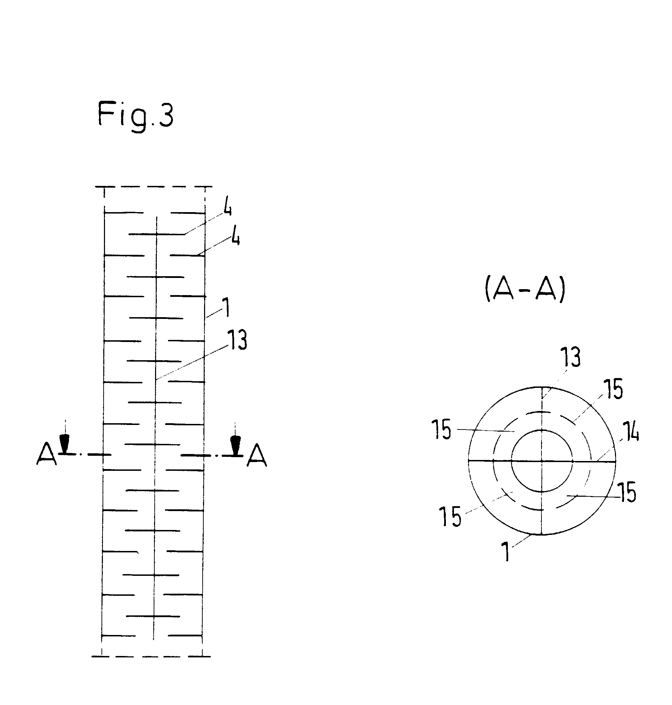

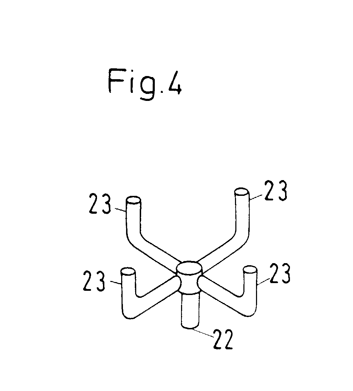

Anstelle der in Figur 5 dargestellten Typen von seitlichen Leitblechen können selbstverständlich als Mittel zum Dispergieren auch andere Einbauten im Rohrreaktor 1 vorgesehen sein. Beispielsweise lassen sich Drahtgitterböden, Lochplatten oder Anordnungen von statischen Mischern hierfür verwenden. Diese unterschiedlichen Arten von Mitteln zum Dispergieren und zur Reduzierung des Rückvermischungsgrades in der flüssigen Phase lassen sich auch vorteilhaft in einem Reaktor miteinander kombinieren. Im Falle eines Reaktors mit großem Innendurchmesser empfiehlt es sich, zusätzlich longitudinal, also parallel zur Reaktorlängsachse ausgerichtete Leitbleche einzusetzen. Diese sollten sich möglichst über die gesamte Reaktorlänge erstrecken. Hierdurch lassen sich das äquivalente Durchmesser/Länge-Verhältnis und der Rückvermischungsgrad im Reaktor wesentlich reduzieren, also zu günstigeren Werten hin verschieben. Eine schematische Darstellung eines solchen Reaktors 1 ist in Figur 3 in Form eines Längsschnitts und eines Querschnitts dargestellt. Man erkennt, daß durch die inneren senkrecht zueinander angeordneten Trennwände 13, 14, die sich parallel zur Reaktorlängsachse erstrecken, das Reaktorinnere in vier gegeneinander abgeschottete parallele Untersektionen 15 aufgeteilt wird. Insbesondere für einen solchen Fall empfiehlt es sich, für mindestens zwei, vorzugsweise für alle drei der folgenden Medienströme jeweils einen gemeinsamen Einlaß zur ersten Sektion vorzusehen, nämlich für den Strom des frisch zugeführten wäßrigen Mediums, für das Sauerstoff enthaltende Gas und/oder die Sauerstoff-freisetzende Lösung und gegebenenfalls für den Rezyklierungsstrom. Durch den gemeinsamen Einlaß wird dann also bereits eine Vormischung der entsprechenden Medienströme hindurchgeführt. Sofern eine Rezyklierung der Suspension vorgesehen ist, muß selbstverständlich jede der parallelen Untersektionen 15 mit einer entsprechenden Rezyklierungsschleife ausgestattet werden. Ein entsprechender für den Reaktor 1 gemäß Figur 3 geeigneter Kombieinlaß für alle drei Medienströme ist in Figur 4 dargestellt. Die Medienzuleitung 22 für die vorgemischten drei Medien verzweigt sich entsprechend der Anzahl der Untersektionen 15 in vier Verteilerleitungen 23, die jeweils in eine der Untersektionen 15 münden. Ein solcher Kombieinlaß hat den Vorteil, daß von vornherein bereits eine relativ intensive Vormischung der Medienströme erfolgt und die Mengenverteilung auf die Untersektionen 15 gleichmäßig ist. In entsprechender Weise könnte man auch für den Abzug des Effluents aus den Untersektionen 15 einen ähnlich gestalteten Kombiauslaß vorsehen (nicht dargestellt). Selbstverständlich sind in Reaktorlängsrichtung verlaufende Trennwände in beliebiger Weise im Rahmen der Erfindung kombinierbar mit den verschiedenen Mitteln zum Dispergieren von Gasbläschen.

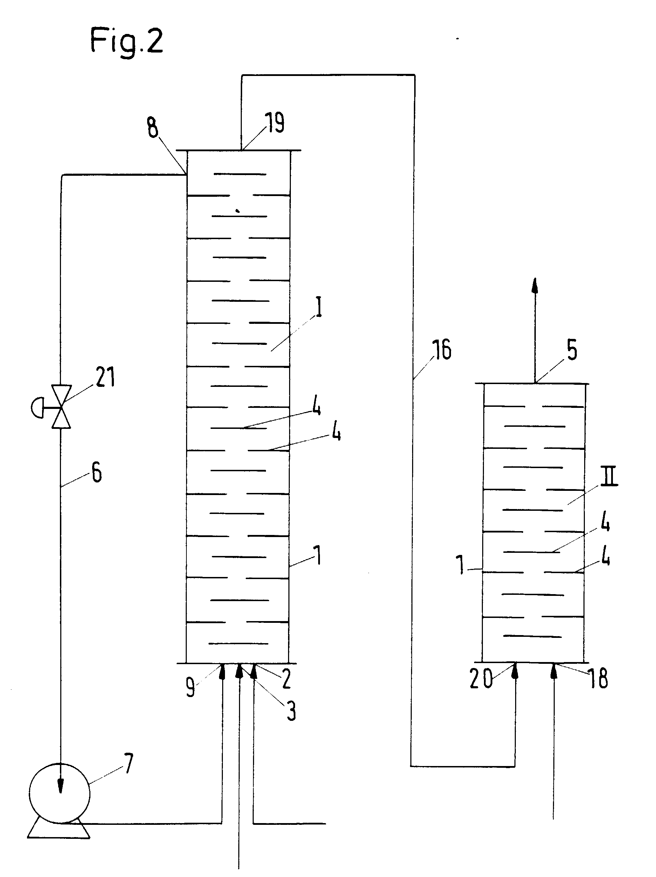

Figur 2 zeigt eine Abwandlung des Reaktors 1 aus Figur 1. Der Unterschied besteht insbesondere darin, daß die beiden Sektionen I und II des Reaktors in diesem Fall jeweils in separaten Gehäusen untergebracht sind, die durch eine Verbindungsrohrleitung 16 miteinander verbunden sind. Der Auslaß aus der Sektion I ist mit 19 und der Einlaß der Verbindungsrohrleitung 16 in die Sektion II mit 20 bezeichnet. Auch in dieser Variante kann wiederum eine separate Zuleitung 18 für ein Sauerstoff enthaltendes Gas oder eine Sauerstoff freisetzende Lösung vorgesehen sein.

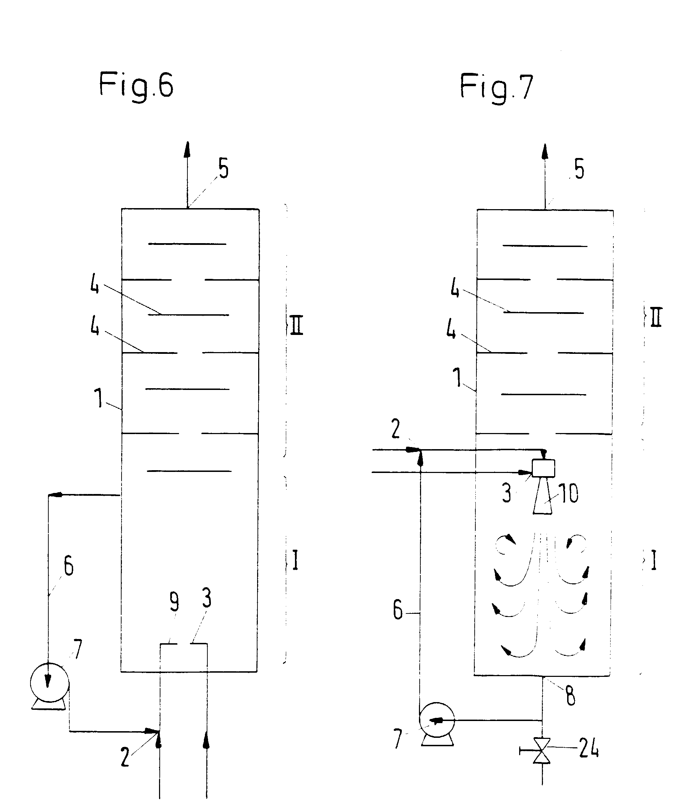

In Figur 6 ist ein ebenfalls zwei Sektionen I, II aufweisender Rohrreaktor 1 als schematischer Längsschnitt dargestellt, dessen erste Sektion I keine mit Figur 1 oder Figur 2 vergleichbaren seitlichen Leitbleche aufweist. Solche Einbauten sind nur in der Sektion II vorgesehen. Die Sektion I weist aber wiederum eine Recyclingschleife 6 auf. Um trotz fehlender Leitbleche in der Sektion I eine intensive Vermischung der Gasbläschen des Sauerstoff enthaltenden Gases mit dem wäßrigen Medium, das in diesem Fall nicht direkt in den Reaktor 1 sondern mittelbar über die Recyclingschleife 6 eingeleitet wird (Einlaß 2 ist an die Recyclingschleife 6 angeschlossen), zu gewährleisten, werden der Rezyklierungsstrom und der Strom des Sauerstoff enthaltenden Gases mit hoher Geschwindigkeit gegeneinander gerichtet im unteren Teil der Sektion I eingedüst. Hierdurch liegen sich der Einlaß 9 der Recyclingschleife 6 und der Einlaß 3 für das Sauerstoff enthaltende Gas relativ nah voneinander beabstandet diametral gegenüber. Ihre Eindüsungsrichtungen sind vorzugsweise koaxial angeordnet. Der eingedüste Flüssigkeitsstrom bewirkt eine intensive Zerteilung des eingedüsten Gases in Form feinster Gasbläschen.

Eine weitere Variante der Erfindung ist in Figur 7 dargestellt. Auch hier unterscheidet sich der Rohrreaktor 1 wiederum in der Sektion I vom Reaktor der Figur 1. In diesem Fall erfolgt der Abzug des in die Sektion I zurückzuführenden wäßrigen Mediums nicht im oberen, sondern im unteren Teil der Sektion I durch den dort angeordneten Auslaß 8. Entsprechend umgekehrt zu der Variante von Figur 1 ist der Einlaß der Recyclingschleife 6 in den Rohrreaktor I im oberen Teil der Sektion I angeordnet. Eine weitere Besonderheit liegt darin, daß der Einlaß der Recyclingschleife 6 als Ejektor 10 ausgeführt ist, über den nicht nur der Rezyklierungsstrom, sondern auch zumindest ein Teil des Sauerstoff enthaltenden Gases (Einlaß 3) eingeführt wird. Die Ausströmrichtung des Ejektors 10 ist zweckmäßig nach unten, also gegen die Durchflußrichtung des Reaktors 1 gerichtet und bewirkt eine intensive Vermischung des Inhalts der Sektion I, wie dies durch die eingezeichneten Pfeile angedeutet ist. Damit ist eine effiziente Dispergierung der Gasbläschen in der wäßrigen Phase gewährleistet. Der Ejektor 10 und der Auslaß 8 liegen einander gegenüber. Der Einlaß 2 für das frische wäßrige Medium ist wiederum nicht direkt an die Sektion I, sondern mittelbar über die Recycling-Schleife 6 an den Reaktor 1 angeschlossen. Mit 24 ist ein Auslaßventil bezeichnet, über das im Bedarfsfall der Reaktor 1 entleert werden kann.

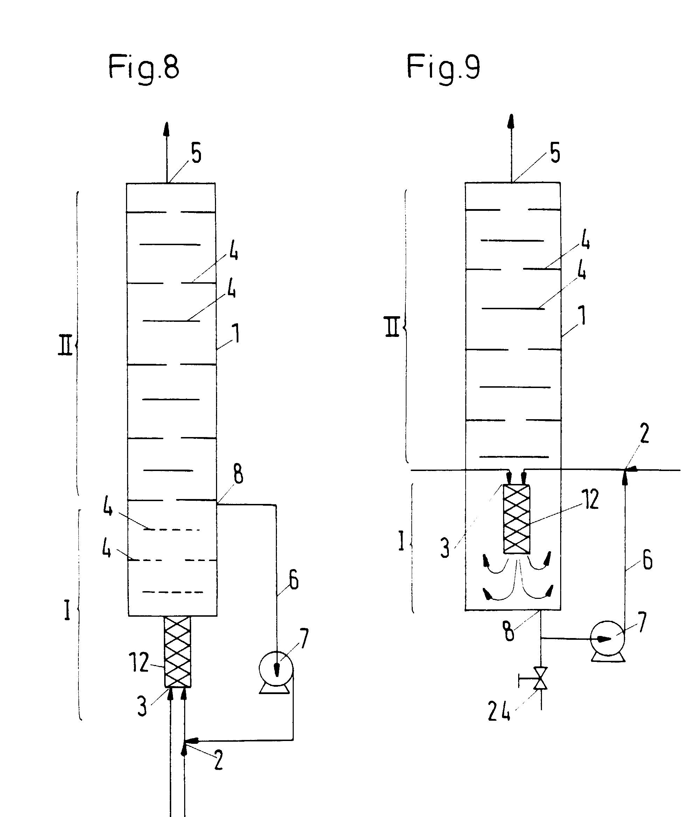

Auch die Ausführungsform gemäß Figur 8 unterscheidet sich von derjenigen der Figur 1 nur durch die erste Sektion I. In diesem Fall ist eine gemeinsame Einleitung der drei Medienströme des frischen wäßrigen Mediums, des Sauerstoffs und des Rezyklierungsstroms über eine unterhalb des Reaktors 1 angeschlossene statische Mischeinrichtung 12 vorgesehen. Die in der Sektion I durch gestrichelte Linien angedeuteten seitlichen Leitbleche 4 können wahlweise als zusätzliche Mittel zur Förderung des Dispergierens der Gasbläschen in dem wäßrigen Medium vorgesehen sein, sind aber nicht unbedingt erforderlich.

Figur 9 zeigt eine Abwandlung der Variante aus Figur 8. In diesem Fall wurde der statische Mischer 12, durch den sämtliche drei Medienströme in die Sektion I eingeführt werden, im Inneren dieser Sektion I angeordnet. Die Ausströmrichtung des statischen Mischers 12 ist in entsprechender Weise wie bei der Variante mit Ejektor 10 gemäß Figur 7 gegen die Durchflußrichtung des Reaktors 1, also von oben nach unten gerichtet.

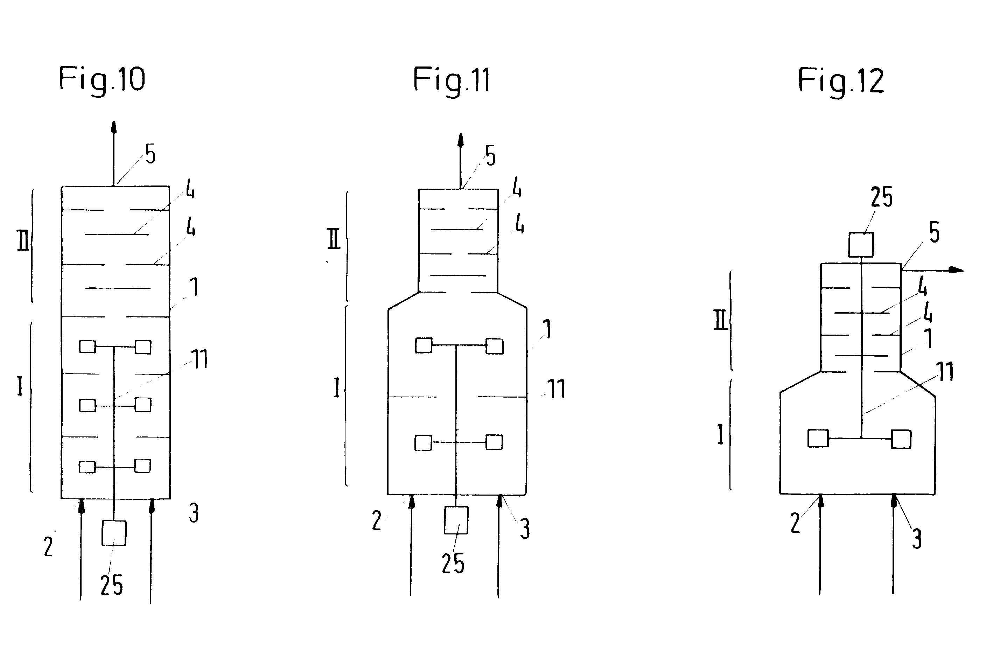

Die Ausführungsformen der Figuren 10 bis 12 zeigen wiederum jeweils Reaktoren 1 mit zwei Sektionen I, II. Die Sektion I weist jedoch keine Recyclingschleife auf, sondern ist stattdessen jeweils mit einem durch einen Elektromotor 25 angetriebenen mechanischen Rührwerk 11 ausgerüstet. In Figur 10 wirken die Mischwerkzeuge jeweils in drei Ebenen, die vorteilhafterweise durch seitliche Leitbleche voneinander separiert sind. In Figur 11 sind zwei Mischebenen für die Sektion I vorgesehen, in Figur 12 ist es lediglich eine einzige. Während die Antriebswellen der Rührwerke 11 in den Figuren 10 und 11 nach unten aus dem Reaktor herausgeführt sind, ist dies im Fall der Figur 12 umgekehrt vorgesehen worden.

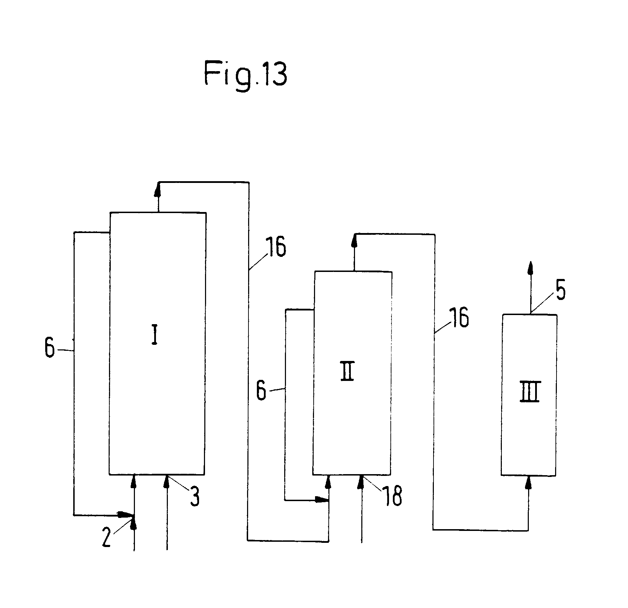

In Figur 13 ist schließlich ein Beispiel für einen erfindungsgemäßen Reaktor mit drei Sektionen I, II, III als schematische Ansicht dargestellt worden. Jede Sektion I, II, III ist jeweils in einem separaten Gehäuse angeordnet. Lediglich die Sektionen I und II sind jeweils mit einer Recyclingschleife 6 versehen worden. Kennzeichnend für die einzelnen Sektionen ist es (ebenso wie in den Varianten der Figuren 1, 2 und 6 bis 12), daß in der letzten Sektion III der Rückvermischungsgrad kleiner ist als in der ersten Sektion I und daß der Rückvermischungsgrad in irgendeiner stromabwärts gelegenen Sektion II, III höchstens genauso groß, vorzugsweise aber kleiner ist als in allen strömaufwärts zu dieser Sektion gelegenen Sektionen I bzw. II. Unter dieser Voraussetzung eines in Durchflußrichtung abnehmenden Rückvermischungsgrades können die erforderlichen Volumina für die einzelnen Sektionen vielfach stufenweise kleiner werden, wie dies in Figur 13 bereits angedeutet ist. Es sind aber ohne weiteres auch Fälle möglich, bei denen wie etwa in Fig. 1 die erste Sektion I größer ist als die stromabwärts gelegene Sektion II. Im Regelfall sind die Innenvolumina der Sektionen unterschiedlich groß. Die zweckmäßige Auslegung richtet sich nach der Art des zu behandelnden Mediums und nach den Betriebsbedingungen. Das Volumenverhältnis zwischen zwei aufeinanderfolgenden Sektionen hängt insbesondere ab von der Effektivität des Massenübergangs aus der gasförmigen in die flüssige Phase, vom tatsächlichen Grad der Rückvermischung in den Sektionen und selbstverständlich vom gewünschten Ausmaß der Reduzierung des COD-Wertes in der jeweiligen Sektion. Zweckmäßig sollte die letzte Sektion als vertikaler Blasensäulenreaktor ausgebildet sein, bei dem das wäßrige Medium und das Sauerstoff enthaltende Gas gleichläufig von unten nach oben hindurchgeführt werden. Im allgemeinen erlauben erfindungsgemäße Reaktoren mit zwei oder drei Sektionen bereits eine außerordentlich starke Reduzierung des COD-Wertes im Effluent. Es ist aber selbstverständlich im Rahmen der Erfindung auch möglich, eine beliebig größere Zahl von Sektionen hintereinanderzuschalten. Festzuhalten bleibt, daß unabhängig von der Festlegung der jeweiligen Größe der einzelnen Sektionen das Gesamtvolumen eines erfindungsgemäßen Reaktors deutlich kleiner gehalten werden kann, als dies bei gleichem Abbaugrad für die zu behandelnden Schadstoffe in einem Reaktor nach dem bisherigen Stand der Technik der Fall wäre.

Eine bevorzugte Ausführung der Erfindung sieht vor, die zum Dispergieren der Sauerstoffbläschen und zur Reduzierung des Rückvermischungsgrades in der flüssigen Phase eingesetzten Mittel 4, 10, 11, 12 und/oder die Separatoren 17 mit einem katalytisch aktiven Material zu beschichten, daß die Oxidation der organischen und oxidierbaren anorganischen Stoffe fördert. Insbesondere kommen hierfür Verbindungen eines oder mehrerer Elemente aus der Gruppe der Metalle Cr, Fe, Mn und Zn und/oder der Oxide von Ce, Cr, Co, Cu, Fe, V, Zn in Frage. Es ist auch möglich, den Katalysator in dem wäßrigen Medium zu dispergieren oder zu lösen und mit der flüssigen Phase durch den Reaktor zu führen.

Das erfindungsgemäße Verfahren wurde bereits weitestgehend in Zusammenhang mit der Erläuterung der Figuren beschrieben. Es wird hinsichtlich der Parameter Druck und Temperatur so betrieben, daß in dem Rohrreaktor praktisch keine Erzeugung von Wasserdampf stattfindet, d.h. daß die flüssige Phase erhalten bleibt. Bevorzugte Temperaturen liegen im Bereich von 200 bis 370 °C, bevorzugte Drücke im Bereich von 20 bis 200 bar. Die Verweilzeit in jeder Sektion des Reaktors wird so bemessen, daß der chemische Sauerstoffbedarf des wäßrigen Mediums auf einen für diese Sektion vorgegebenen gewünschten Wert reduziert wird. Dies läßt sich bei Sektionen mit Recycling-Schleife auf sehr einfache Art durch Einstellung der Rezyklierungsrate beeinflussen. Vorzugsweise wird der größere Teil der durch eine stromaufwärts gelegene Sektion hindurchströmenden Stoffmenge wieder in diese Sektion zurückgeführt. Wesentlich ist es, daß die stromaufwärts gelegenen Sektionen, insbesondere die erste, mit einer starken Durchmischung betrieben werden, damit ein möglichst intensiver Massenübergang aus der Gas- in die Flüssig-Phase erreicht wird; die stromabwärts gelegenen Sektionen, insbesondere die letzte Sektion, sind demgegenüber mit einem möglichst niedrigen Grad an Rückvermischung in der flüssigen Phase zu betreiben.

## Patentansprüche

1. Anlage zur Oxidation eines wäßrigen Mediums, das organische und/oder oxidierbare anorganische Stoffe enthält bei erhöhter Temperatur und erhöhtem Druck, wobei das wäßrige Medium in einem Reaktor Sauerstoff ausgesetzt wird, um den chemischen Sauerstoffbedarf des wäßrigen Mediums auf ein vorgegebenes gewünschtes Niveau zu reduzieren,
- mit einem Rohrreaktor (1), der in wenigstens zwei hintereinander geschaltete, miteinander verbundene Sektionen (I, II, III) aufgeteilt ist die jeweils einen vorgegebenen Grad der Rückvermischung in der wäßrigen Phase aufweisen,
- mit wenigstens einem Einlaß in der am weitesten stromaufwärts liegenden Sektion (I) für die Einleitung des wäßrigen Mediums (2) und eines Sauerstoff enthaltenden Gases oder einer Sauerstoff freisetzenden Lösung (3),
- mit mindestens in der am weitesten stromaufwärts gelegenen Sektion (I) angeordneten Mitteln (4, 10, 11, 12) zum Dispergieren von Bläschen des gasförmigen Sauerstoffs in dem wäßrigen Medium
- und mit mindestens einem Auslaß für den Abzug des behandelten wäßrigen Mediums (5) aus dem Rohrreaktor (1), wobei der Auslaß für das behandelte Medium (5) in der am weitesten stromabwärts gelegenen Sektion (II, III) mit Abstand vom Übergangsbereich zur unmittelbar benachbarten Sektion (I, II) angeordnet ist,
dadurch gekennzeichnet
- daß die einzelnen Sektionen (I, II, III) derartig hintereinander geschaltet sind, daß der Grad der Rückvermischung einer stromabwärts gelegenen Sektion (II, III) jeweils höchstens genau so groß ist wie der jeweilige Grad der Rückvermischung in den relativ zu dieser Sektion (I oder II) stromaufwärts gelegenen Sektionen (II oder III) und
- daß zumindest in der am weitesten stromabwärts gelegenen Sektion (II oder III) der Grad der Rückvermischung kleiner ist als in der am weitesten stromaufwärts gelegenen Sektion (I).

2. Anlage nach Anspruch 1,
dadurch gekennzeichnet,
daß der Rohrreaktor (1) vertikal ausgerichtet ist.

3. Anlage nach Anspruch 1 oder 2,
dadurch gekennzeichnet,
daß die einzelnen Sektionen (I,II,II) derart hintereinander geschaltet sind, daß der Grad der Rückvermischung in jeder der stromabwärts gelegenen Sektionen(II,III) kleiner ist als in der jeweils unmittelbar benachbarten stromaufwärts gelegenen Sektion (I,II).

4. Anlage nach einem der Ansprüche 1 bis 3,
dadurch gekennzeichnet,
daß mindestens eine Recycling-Schleife (6) vorgesehen ist, die wenigstens eine Pumpe (7) enthält und mit der ein Teil der Mischung des wäßrigen Mediums und des gasförmigen Sauerstoffs, die den Übergangsbereich einer Sektion (I, II) zur unmittelbar benachbarten stromabwärts gelegenen Sektion (II, III) erreicht, abgezogen (8) und stromaufwärts in dieselbe Sektion (I, II) zurückgeführt wird.

5. Anlage nach Anspruch 4,
dadurch gekennzeichnet,
daß der Auslaß (8) der Recycling-Schleife (6), durch den der zurückzuführende Teil der Mischung des wäßrigen Mediums und des gasförmigen Sauerstoffs aus der Sektion (I, II) abgezogen wird, jeweils in der Nähe des Übergangsbereichs der Sektion (I, II) zur unmittelbar benachbarten stromabwärts gelegenen Sektion (II, III) angeordnet ist.

6. Anlage nach einem der Ansprüche 1 bis 5,
dadurch gekennzeichnet,
daß die Mittel zum Dispergieren der Bläschen des Sauerstoffs mindestens ein motorisch angetriebenes Rührwerk (11) umfassen.

7. Anlage nach einem der Ansprüche 1 bis 6,
dadurch gekennzeichnet,
daß die Mittel zum Dispergieren der Bläschen des Sauerstoffs Einrichtungen eines statischen Mischers (12) umfassen.

8. Anlage nach einem der Ansprüche 1 bis 7,
dadurch gekennzeichnet,
daß mindestens eine Recycling-Schleife (6) vorgesehen ist, die wenigstens eine Pumpe (7) enthält und mit der ein Teil der Mischung des wäßrigen Mediums und des gasförmigen Sauerstoffs innerhalb einer Sektion (I) umgepumpt werden kann, wobei der Einlaß (9) der Recycling-Schleife (6), durch den der zurückzuführende Teil der Mischung in die Sektion (I) wieder eingeführt wird, als Ejektor (10) oder als statischer Mischer (12) ausgebildet ist, durch den zumindest ein Teil des Sauerstoffs in den Reaktor (1) einführbar ist.

9. Anlage nach Anspruch 8,
dadurch gekennzeichnet,
daß die Ausströmrichtung des Einlasses (9) gegen die Durchflußrichtung des Reaktors (1) gerichtet ist, daß der Einlaß (9) in der Nähe des Übergangsbereichs der Sektion (I) zur unmittelbar stromabwärts gelegenen Sektion (II) angeordnet ist und daß der Auslaß (8) der Recycling-Schleife (6), durch den der zurückzuführende Teil der Mischung aus der Sektion (I) abgezogen wird, dem Einlaß (9) stromaufwärts gegenüberliegt.

10. Anlage nach einem der Ansprüche 4 bis 5,
dadurch gekennzeichnet,
daß der Einlaß (9) der Recycling-Schleife (6) und der Einlaß (3) für das Sauerstoff enthaltende Gas oder die Sauerstoff freisetzende Lösung unmittelbar einander gegenüberliegen, so daß der frisch zugeführte Sauerstoff und die zurückgeführte Mischung aus der Recycling-Schleife (6) unmittelbar aufeinandertreffen.

11. Anlage nach einem der Ansprüche 4 bis 10,
dadurch gekennzeichnet,
daß der Einlaß (2) für das dem Reaktor (1) frisch zuzuführende wäßrige Medium an der Recycling-Schleife (6) der am weitesten stromaufwärts gelegenen Sektion (I) angeordnet ist.

12. Anlage nach einem der Ansprüche 1 bis 11,
dadurch gekennzeichnet,
daß der wenigstens eine Einlaß für die Einleitung des wäßrigen Mediums (2) und des Sauerstoff enthaltenden Gases oder der Sauerstoff freisetzenden Lösung(3) im Boden des Rohrreaktors (1) oder in dessen Nähe angeordnet ist.

13. Anlage nach einem der Ansprüche 1 bis 12,
dadurch gekennzeichnet,
daß der mindestens eine Auslaß für die Ableitung des behandelten wäßrigen Mediums (5) an der Spitze der am weitesten stromabwärts gelegenen Sektion (II, III) des Rohrreaktors (1) oder in deren Nähe angeordnet ist.

14. Anlage nach einem der Ansprüche 1 bis 13,
dadurch gekennzeichnet,
daß die erste, am weitesten stromaufwärts gelegene Sektion (I) für mindestens zwei der folgenden Medienströme einen gemeinsamen Einlaß aufweist: Der Strom des frisch zugeführten wäßrigen Mediums, der Recyklierungsstrom und der Strom des Sauerstoff enthaltenden Gases oder der Sauerstoff freisetzenden Lösung.

15. Anlage nach einem der Ansprüche 1 bis 14,
dadurch gekennzeichnet,
daß wenigstens eine Sektion des Rohrreaktors (1) eine Anordnung von in Längsrichtung verlaufenden Trennwänden (13, 14) aufweist, die die Sektion in zwei oder mehr parallele Untersektionen (15) aufteilt.

16. Anlage nach einem der Ansprüche 1 bis 15,
dadurch gekennzeichnet,
daß mindestens zwei, insbesondere alle Sektionen (I, II, III) des Rohrreaktors (1) separate Gehäuse aufweisen, die jeweils durch eine Rohrleitung (16) miteinander verbunden sind.

17. Anlage nach einem der Ansprüche 1 bis 16,
dadurch gekennzeichnet,
daß alle oder mindestens zwei unmittelbar benachbarte Sektionen (I, II) des Rohrreaktors (1) ein gemeinsames Gehäuse aufweisen, wobei die Sektionen (I, II) im Übergangsbereich jeweils durch einen Separator (17) voneinander getrennt sind, der einen freien Massentransfer zwischen zwei benachbarten Sektionen (I, II) aber nur eine begrenzte Drehimpulsübertragung gestattet.

18. Anlage nach einem der Ansprüche 1 bis 17,
dadurch gekennzeichnet,
daß die Innenvolumina der einzelnen Sektionen (I, II, III) untereinander jeweils unterschiedlich groß sind.

19. Anlage nach einem der Ansprüche 17 bis 18,
dadurch gekennzeichnet,
daß der Separator (17) aus einer oder mehreren Lochplatten oder aus einem oder mehreren Drahtgitterböden besteht, deren Durchmesser im wesentlichen gleich groß ist wie der Innendurchmesser des Rohrreaktors (1), wobei die Lochplatten oder Drahtgitterböden im wesentlichen parallel zueinander in einem Abstand von nicht mehr als 20 cm angeordnet und im wesentlichen im rechten Winkel zur Längsachse des Rohrreaktors (1) gerichtet sind.

20. Anlage nach einem der Ansprüche 17 bis 18,
dadurch gekennzeichnet,
daß der Separator (17) als Wabenelement (honeycomb) ausgebildet ist, dessen Durchmesser im wesentlichen gleich groß ist wie der Innendurchmesser des Rohrreaktors (1), dessen Dicke nicht größer als 20 cm ist und das im wesentlichen im rechten Winkel zur Längsachse des Rohrreaktors (1) gerichtet ist.

21. Anlage nach einem der Ansprüche 17 bis 18,
dadurch gekennzeichnet,
daß der Separator (17) aus einer statischen Gas/Flüssig-Mischeinrichtung besteht, deren Dicke relativ zum Durchmesser des Rohrreaktors (1) klein ist und die im wesentlichen im rechten Winkel zur Längsachse des Rohrreaktors (1) gerichtet ist.

22. Anlage nach einem der Ansprüche 1 bis 21,
dadurch gekennzeichnet,
daß die hinter der am weitesten stromaufwärts gelegenen Sektion (I) angeordneten Sektionen (II) in der Nähe ihres stromaufwärts gelegenen Endes jeweils einen eigenen Einlaß (18) zur Einleitung von frischem Sauerstoff enthaltendem Gas oder einer Wasserstoffperoxidlösung aufweist.

23. Anlage nach einem der Ansprüche 1 bis 22,
dadurch gekennzeichnet,
daß der Einlaß zur Einleitung des frischen Sauerstoff enthaltenden Gases oder der Wasserstoffperoxidlösung in der Recycling-Schleife (6) der jeweiligen Sektion (I, II) angeordnet ist.

24. Anlage nach einem der Ansprüche 1 bis 23,
dadurch gekennzeichnet,
daß die Mittel (4, 10, 11, 12) zum Dispergieren von Bläschen des Sauerstoffs und zur Reduzierung der Rückvermischung in der flüssigen Phase und/oder die Separatoren (17) zur Oxidation der organischen und oxidierbaren anorganischen Stoffe mit katalytisch aktivem Material beschichtet sind, wobei die Beschichtung insbesondere aus einer oder mehreren Verbindungen aus der Gruppe der Metalle Cr, Fe, Mn, Zn und/oder der Oxide von Ce, Cr, Co, Cu, Fe, V, Zn besteht.

25. Anlage nach einem der Ansprüche 1 bis 24,
dadurch gekennzeichnet,
daß die am weitesten stromabwärts gelegene Sektion (II oder III) als vertikaler Blasensäulenreaktor ausgebildet ist, bei dem das wäßrige Medium und das Sauerstoff enthaltende Gas gleichläufig von unten nach oben hindurchgeführt werden.

26. Verfahren zur Oxidation eines wäßrigen Mediums, das organische und/oder oxidierbare anorganische Stoffe enthält, bei erhöhter Temperatur und erhöhtem Druck ohne nennenswerte Erzeugung von Wasserdampf in einem Rohrreaktor, der in wenigstens zwei hintereinander geschaltete, miteinander verbundene Sektionen aufgeteilt ist, in denen das wäßrige Medium gasförmigem Sauerstoff ausgesetzt wird, um den chemischen Sauerstoffbedarf des wäßrigen Mediums auf ein vorgegebenes gewünschtes Niveau zu reduzieren, wobei das wäßrige Medium und das Sauerstoff enthaltende Gas in die erste Sektion des Rohrreaktors eingeführt und dann nacheinander die weitere oder weiteren stromabwärts liegenden Sektionen durchläuft, wobei zumindest in der am weitesten stromaufwärts gelegenen Sektion jeweils in der Weise auf das wäßrige Medium eingewirkt wird, daß das Dispergieren von Bläschen des Sauerstoffs in dem wäßrigen Medium gefördert wird, und wobei das behandelte wäßrige Medium aus der letzten stromabwärts gelegenen Sektion abgezogen wird, dadurch gekennzeichnet,
daß jede Sektion so betrieben wird, daß der Grad der Rückvermischung in der flüssigen Phase in dieser Sektion nicht höher ist als der Grad der Rückvermischung in den jeweils stromaufwärts angeordneten Sektionen, wobei der Grad der Rückvermischung in der am weitesten stromabwärts gelegenen Sektion kleiner ist als in der am weitesten stromaufwärts gelegenen Sektion und daß das wäßrige Medium eine ausreichend lange Zeit in der jeweiligen Sektion verweilt, bis der chemische Sauerstoffbedarf auf einen für diese Sektion vorgegebenen gewünschten Wert reduziert ist.

27. Verfahren nach Anspruch 26,
dadurch gekennzeichnet,
daß jede Sektion so betrieben wird, daß der Grad der Rückvermischung in dieser Sektion kleiner ist als in allen stromaufwärts gelegenen Sektionen.

28. Verfahren nach einem der Ansprüche 26 bis 27,
dadurch gekennzeichnet,
daß mindestens die erste Sektion an eine Recycling-Schleife angeschlossen ist, durch die ein Teil der den Reaktor durchströmenden Mischung des wäßrigen Mediums und des gasförmigen Sauerstoffs zum Anfang der Sektion zurückgeführt wird

29. Verfahren nach einem der Ansprüche 26 bis 28,
dadurch gekennzeichnet,
daß das Verfahren in einem Rohrreaktor mit zwei Sektionen durchgeführt wird.

30. Verfahren nach einem der Ansprüche 26 bis 29,
dadurch gekennzeichnet,
daß die Einleitung des wäßrigen Mediums von einer stromaufwärts gelegenen Sektion in die stromabwärts benachbarte Sektion, die ein von dem Gehäuse der stromaufwärts gelegenen Sektion getrenntes Gehäuse aufweist, über eine separate Rohrleitung erfolgt.

31. Verfahren nach einem der Ansprüche 26 bis 30,
dadurch gekennzeichnet,
daß die Einleitung des wäßrigen Mediums von einer stromaufwärts gelegenen Sektion in die stromabwärts benachbarte und in einem gemeinsamen Gehäuse des Rohrreaktors angeordnete Sektion durch Einsatz von Strömungsleitmitteln so beeinflußt wird, daß die Strömung des wäßrigen Mediums im wesentlichen nur in Längsrichtung des Rohrreaktors erfolgt und andere Strömungsrichtungen unterdrückt werden.

32. Verfahren nach einem der Ansprüche 26 bis 31,
dadurch gekennzeichnet,
daß die Temperatur im Bereich von 200 bis 370 °C und der Druck im Bereich vom 20 bis 200 bar gehalten werden.

33. Verfahren nach einem der Ansprüche 26 bis 32,
dadurch gekennzeichnet,
daß jeweils der größere Teil der eine Sektion mit Recycling-Schleife durchströmenden Menge der wäßrigen Lösung zum Anfang der jeweiligen Sektion zurückgeführt wird.

34. Verfahren nach einem der Ansprüche 26 bis 33,
dadurch gekennzeichnet,
daß das Dispergieren der Gasbläschen des Sauerstoffs durch ständiges Aufprallen der strömenden Mischung des wäßrigen Mediums und der Gasbläschen auf Strömungsleitkörper erfolgt, die in der oder den Sektionen angeordnet sind.

35. Verfahren nach einem der Ansprüche 26 bis 34,
dadurch gekennzeichnet,
daß in wenigstens einer, insbesondere in allen der ersten Sektion nachgeschalteten Sektionen zusätzlich frischer gasförmiger Sauerstoff oder eine Wasserstoffperoxidlösung eingeleitet wird, insbesondere in der Nähe des Übergangs von der stromaufwärts benachbarten Sektion zu der jeweiligen Sektion.

36. Verfahren nach einem der Ansprüche 26 bis 35,
dadurch gekennzeichnet,
daß der Sauerstoff in Form von Ozon zugeführt wird.

37. Verfahren nach einem der Ansprüche 26 bis 36,
dadurch gekennzeichnet,
daß die Oxidation unter Anwesenheit eines die Reaktion fördernden Katalysators, insbesondere eines Katalysators erfolgt, der aus Verbindungen eines oder mehrerer Stoffe aus der Gruppe der Metalle Cr, Fe, Mn, Zn und/oder der Oxide von Ce, Cr, Co, Cu, Fe, V, Zn gebildet ist.

38. Verfahren nach Anspruch 37,
dadurch gekennzeichnet,
daß der Katalysator als Suspension oder Lösung in die erste Sektion eingebracht wird.

## Claims

1. A plant for the oxidation of an aqueous medium which contains organic and/or oxidisable inorganic substances, at elevated temperature and elevated pressure, the aqueous medium being exposed to oxygen in a reactor in order to reduce the chemical oxygen demand of the aqueous medium to a preset desired level,
- with a tubular reactor (1) which is divided into at least two interconnected sections (I, II, III) connected in series, each of which have a preset degree of back-mixing in the aqueous phase,
- with at least one inlet in the section (I) located farthest upstream for introducing the aqueous medium (2) and an oxygen-containing gas or an oxygen-releasing solution (3),
- with means (4, 10, 11, 12) located at least in the section (I) located farthest upstream for dispersing bubbles of the gaseous oxygen in the aqueous medium,
- and with at least one outlet for removing the treated aqueous medium (5) from the tubular reactor (1), the outlet for the treated medium (5) being located in the section (II, III) located farthest downstream at a distance from the region of transition to the immediately adjoining section (I, II),
characterised in that
- the individual sections (I, II, III) are connected in series such that the degree of back-mixing of a section (II, III) located downstream in each case is at most just as great as the respective degree of back-mixing in the sections (II or III) located upstream relative to this section (I or II), and that
- at least in the section (II or III) located farthest downstream the degree of back-mixing is less than in the section (I) located farthest upstream.

2. A plant according to Claim 1, characterised in that the tubular reactor (1) is oriented vertically.

3. A plant according to Claim 1 or 2, characterised in that the individual sections (I, II, III) are connected in series such that the degree of back-mixing in each of the downstream sections (II, III) is less than in the immediately adjoining upstream section (I, II) in each case.

4. A plant according to one of Claims 1 to 3, characterised in that at least one recycling loop (6) is provided which contains at least one pump (7) and with which a portion of the mixture of the aqueous medium and the gaseous oxygen which reaches the region of transition of one section (I, II) into the section (II, III) located downstream immediately adjoining it is withdrawn (8) and is recycled upstream into the same section (I, II).

5. A plant according to Claim 4, characterised in that the outlet (8) of the recycling loop (6) through which the portion of the mixture of the aqueous medium and of the gaseous oxygen which is to be recycled is withdrawn from the section (I, II) is located in each case in the vicinity of the region of transition of the section (I, II) into the section (II, III) located downstream immediately adjoining it.

6. A plant according to one of Claims 1 to 5, characterised in that the means for dispersing the bubbles of the oxygen comprise at least one motor-driven stirrer mechanism (11).

7. A plant according to one of Claims 1 to 6, characterised in that the means for dispersing the bubbles of the oxygen comprise means of a static mixer (12).

8. A plant according to one of Claims 1 to 7, characterised in that at least one recycling loop (6) is provided which contains at least one pump (7) and with which a portion of the mixture of the aqueous medium and the gaseous oxygen can be circulated by pumping within one section (I), the inlet (9) of the recycling loop (6) through which the portion of the mixture which is to be recycled is reintroduced into the section (I) is in the form of an ejector (10) or a static mixer (12), through which at least part of the oxygen can be introduced into the reactor (1).

9. A plant according to Claim 8, characterised in that the direction of outflow of the inlet (9) is counter to the direction of flow through the reactor (1), that the inlet (9) is arranged in the vicinity of the region of transition of the section (I) into the section (II) located immediately downstream and that the outlet (8) of the recycling loop (6) through which the portion of the mixture which is to be recycled is withdrawn from section (I) lies opposite and upstream of the inlet (9).

10. A plant according to one of Claims 4 to 5, characterised in that the inlet (9) of the recycling loop (6) and the inlet (3) for the oxygen-containing gas or the oxygen-releasing solution lie directly opposite one another, so that the freshly supplied oxygen and the recycled mixture from the recycling loop (6) meet one another directly.

11. A plant according to one of Claims 4 to 10, characterised in that the inlet (2) for the aqueous medium which is to be supplied freshly to the reactor (1) is located on the recycling loop (6) of the section (I) located farthest upstream.

12. A plant according to one of Claims 1 to 11, characterised in that the at least one inlet for introducing the aqueous medium (2) and the oxygen-containing gas or the oxygen-releasing solution (3) is located in the bottom of the tubular reactor (1) or in the vicinity thereof.

13. A plant according to one of Claims 1 to 12, characterised in that the at least one outlet for removing the treated aqueous medium (5) is located at the tip of the section (II, III) of the tubular reactor (1) which is located farthest downstream, or in the vicinity thereof.

14. A plant according to one of Claims 1 to 13, characterised in that the first section (I) which is located farthest upstream has a common inlet for at least two of the following media streams: the stream of the freshly supplied aqueous medium, the recycling stream and the stream of the oxygen-containing gas or the oxygen-releasing solution.

15. A plant according to one of Claims 1 to 14, characterised in that at least one section of the tubular reactor (1) has an arrangement of partitions (13, 14) which extend in the longitudinal direction, which arrangement divides the section into two or more parallel sub-sections (15).

16. A plant according to one of Claims I to 15, characterised in that at least two, in particular all, sections (I, II, III) of the tubular reactor (1) have separate housings, which are each connected together by a pipe (16).

17. A plant according to one of Claims 1 to 16, characterised in that all or at least two immediately adjoining sections (I, II) of the tubular reactor (1) have a common housing, the sections (I, II) in the region of transition each being separated from each other by a separator (17) which permits free mass transfer between two adjoining sections (I, II) but only a limited transmission of angular momentum.

18. A plant according to one of Claims I to 17, characterised in that the inner volumes of the individual sections (I, II, III) relative to each other are each of different sizes.

19. A plant according to one of Claims 17 to 18, characterised in that the separator (17) consists of one or more perforated plates or of one or more wire grid plates, the diameter of which is substantially the same as the internal diameter of the tubular reactor (1), the perforated plates or wire grid plates being arranged substantially parallel to one another at a distance of no more than 20 cm and being directed substantially at right-angles to the longitudinal axis of the tubular reactor (1).

20. A plant according to one of Claims 17 to 18, characterised in that the separator (17) is in the form of a honeycomb element, the diameter of which is substantially equal to the internal diameter of the tubular reactor (1), the thickness of which is no greater than 20 cm and which is directed substantially at right-angles to the longitudinal axis of the tubular reactor (1).

21. A plant according to one of Claims 17 to 18, characterised in that the separator (17) consists of a static gas/liquid mixing apparatus, the thickness of which is low relative to the diameter of the tubular reactor (1) and which is directed substantially at right-angles to the longitudinal axis of the tubular reactor (1).

22. A plant according to one of Claims 1 to 21, characterised in that the sections (II) located after the section (I) located farthest upstream have in the vicinity of their upstream ends in each case their own inlets (18) for introducing fresh oxygen-containing gas or a hydrogen peroxide solution.

23. A plant according to one of Claims 1 to 22, characterised in that the inlet for introducing the gas containing fresh oxygen or the hydrogen peroxide solution is located in the recycling loop (6) of the respective section (I, II).

24. A plant according to one of Claims I to 23, characterised in that the means (4, 10, 11, 12) for dispersing bubbles of the oxygen and for reducing the back-mixing in the liquid phase and/or the separators (17) for oxidation of the organic and oxidisable inorganic substances are coated with catalytically active material, the coating consisting in particular of one or more compounds from the group of metals Cr, Fe, Mn, Zn and/or the oxides of Ce, Cr, Co, Cu, Fe, V, Zn.

25. A plant according to one of Claims 1 to 24, characterised in that the section (II or III) located farthest downstream is in the form of a vertical bubble column reactor, in which the aqueous medium and the oxygen-containing gas are passed through in a cocurrent flow from bottom to top.

26. A method for oxidation of an aqueous medium which contains organic and/or oxidisable inorganic substances, at elevated temperature and elevated pressure without significant production of steam in a tubular reactor which is divided into at least two interconnected sections connected in series, in which the aqueous medium is exposed to gaseous oxygen in order to reduce the chemical oxygen demand of the aqueous medium to a preset desired level, the aqueous medium and the oxygen-containing gas being introduced into the first section of the tubular reactor and then passing in succession through the additional downstream section or sections, with the aqueous medium being acted on at least in the section located farthest upstream in each case such that the dispersion of bubbles of the oxygen in the aqueous medium is promoted, and wherein the treated aqueous medium is removed from the last downstream section,
characterised in that
each section is operated such that the degree of back-mixing in the liquid phase in this section is no higher than the degree of back-mixing in the sections located upstream in each case, the degree of back-mixing in the section located farthest downstream being smaller than in the section located farthest upstream and that the aqueous medium dwells for a sufficiently long time in the respective section that the chemical oxygen demand is reduced to a desired value preset for this section.

27. A method according to Claim 26, characterised in that each section is operated such that the degree of back-mixing in this section is less than in all the upstream sections.

28. A method according to one of Claims 26 to 27, characterised in that at least the first section is connected to a recycling loop through which part of the mixture consisting of the aqueous medium and the gaseous oxygen which flows through the reactor is recycled to the beginning of the section.

29. A method according to one of Claims 26 to 28, characterised in that the method is performed in a tubular reactor with two sections.

30. A method according to one of Claims 26 to 29, characterised in that the introduction of the aqueous medium from an upstream section into the neighbouring downstream section, which has a housing separate from the housing of the upstream section, is effected via a separate pipe.

31. A method according to one of Claims 26 to 30, characterised in that the introduction of the aqueous medium from an upstream section into the neighbouring downstream section which is arranged in a common housing of the tubular reactor is influenced by the use of flow guidance means such that the flow of the aqueous medium is substantially only in the longitudinal direction of the tubular reactor and other directions of flow are suppressed.

32. A method according to one of Claims 26 to 31, characterised in that the temperature is kept in the range from 200 to 370°C and the pressure in the range from 20 to 200 bar.

33. A method according to one of Claims 26 to 32, characterised in that in each case the major part of the quantity of the aqueous solution which flows through one section with recycling loop is recycled to the beginning of the respective section.

34. A method according to one of Claims 26 to 33, characterised in that the dispersion of the gas bubbles of the oxygen is effected by constant impact of the flowing mixture of the aqueous medium and the gas bubbles on flow guidance elements which are located in the section or sections.

35. A method according to one of Claims 26 to 34, characterised in that additionally fresh gaseous oxygen or a hydrogen peroxide solution is introduced into at least one, in particular in all, of the section(s) succeeding the first section, in particular in the vicinity of the transition from the neighbouring upstream section to the respective section.

36. A method according to one of Claims 26 to 35, characterised in that the oxygen is supplied in the form of ozone.

37. A method according to one of Claims 26 to 36, characterised in that the oxidation is effected in the presence of a catalyst which promotes the reaction, in particular a catalyst which is formed of compounds of one or more substances from the group of metals Cr, Fe, Mn, Zn and/or the oxides of Ce, Cr, Co, Cu, Fe, V, Zn.

38. A method according to Claim 37, characterised in that the catalyst is introduced into the first section as a suspension or solution.

## Revendications

1. Installation pour l'oxydation d'un milieu aqueux, qui contient des matières organiques et/ou inorganiques pouvant être oxydées à une température élevée et une pression élevée, le milieu aqueux étant exposé, dans un réacteur, à de l'oxygène pour réduire le besoin chimique en oxygène du milieu aqueux à un niveau souhaité prédéfini, comportant :
- un réacteur tubulaire (1), qui est partagé en au moins deux sections (I,II,III) montées l'une derrière l'autre et reliées l'une à l'autre, qui présentent, à chaque fois, un degré prédéfini du remélangeage dans la phase aqueuse,
- au moins une entrée dans la section (I) se trouvant le plus en amont pour l'introduction du milieu aqueux (2) et d'un gaz contenant de l'oxygène ou d'une solution (3) libérant de l'oxygène,
- au moins des moyens (4,10,11,12) agencés dans la section (I) se trouvant le plus en amont pour disperser des bulles de l'oxygène gazeux dans le milieu aqueux, et
- au moins une sortie pour l'évacuation du milieu aqueux traité (5) du réacteur tubulaire (1), la sortie pour le milieu traité (5) étant agencée dans la section (II,III) se trouvant le plus en aval à distance de la zone de transition par rapport à la section (I,II) directement voisine,
caractérisée en ce que :
- les sections individuelles (I,II,III) sont montées l'une derrière l'autre de sorte que le degré du remélangeage d'une section (II,III) se trouvant en aval est à chaque fois, au plus, exactement égal au degré respectif du remélangeage dans les sections (Il ou III) se trouvant, par rapport à cette section (I ou Il) en amont, et
- au moins dans la section (Il ou III) se trouvant le plus en aval, le degré du remélangeage est plus petit que dans la section (I) se trouvant le plus en amont.

2. Installation selon la revendication 1,
caractérisée en ce que le réacteur tubulaire (1) est orienté verticalement.

3. Installation selon la revendication 1 ou 2,
caractérisée en ce que les sections individuelles (I,II,III) sont montées l'une derrière l'autre de sorte que le degré du remélangeage dans chacune des sections (II,III) se trouvant en aval est plus petit que dans la section (I,II) se trouvant en amont, à chaque fois directement voisine.

4. Installation selon une des revendications 1 à 3,
caractérisée en ce qu'au moins un circuit fermé de recyclage (6) est prévu, qui comporte au moins une pompe (7) et grâce auquel une partie du mélange du milieu aqueux et de l'oxygène gazeux, qui atteint la zone de transition d'une section (I,II) par rapport à la section (II,III) se trouvant en aval directement voisine, est prélevée (8) et ramenée en amont dans cette même section (I,II).

5. Installation selon la revendication 4,
caractérisée en ce que la sortie (8) du circuit fermé de recyclage (6), à travers laquelle la partie à ramener du mélange du milieu aqueux et de l'oxygène gazeux est prélevée de la section (I,II), est agencée, à chaque fois, à proximité de la zone de transition de la section (I,II) par rapport à la section (II,III) se trouvant en aval directement voisine.

6. Installation selon une des revendications 1 à 5,
caractérisée en ce que les moyens pour disperser les bulles d'oxygène comportent au moins un agitateur (11) entraîné de façon motorisée.

7. Installation selon une des revendications 1 à 6,
caractérisée en ce que les moyens pour disperser les bulles d'oxygène comportent des dispositifs d'un mélangeur statique (12).

8. Installation selon une des revendications 1 à 7,
caractérisée en ce qu'au moins un circuit fermé de recyclage (6) est prévu qui comporte au moins une pompe (7) et grâce auquel une partie du mélange du milieu aqueux et de l'oxygène gazeux peut être pompée à l'intérieur d'une section (I), l'entrée (9) du circuit fermé du recyclage (6), à travers laquelle la partie à ramener du mélange est à nouveau introduite dans la section (I), étant réalisée comme éjecteur (10) ou comme mélangeur statique (12), à travers lequel au moins une partie de l'oxygène peut être introduite dans le réacteur (1).

9. Installation selon la revendication 8,
caractérisée en ce que le sens d'écoulement de l'entrée (9) est orienté à l'encontre du sens de circulation du réacteur (1), en ce que l'entrée (9) est agencée à proximité de la zone de transition de la section (I) par rapport à la section (Il) prévue directement en aval, et en ce que la sortie (8) du circuit fermé du recyclage (6), à travers laquelle la partie à ramener du mélange est prélevée de la section (I), est opposée en amont à l'entrée (9).

10. Installation selon une des revendications 4 à 5,
caractérisée en ce que l'entrée (9) du circuit fermé de recyclage (6) et l'entrée (3) pour le gaz contenant de l'oxygène ou la solution libérant de l'oxygène sont directement opposées l'une à l'autre, de sorte que l'oxygène fraîchement amené et le mélange ramené à partir du circuit fermé de recyclage (6) se rencontrent directement.

11. Installation selon une des revendications 4 à 10,
caractérisée en ce que l'entrée (2) pour le milieu aqueux devant être fraîchement amené au réacteur (1) est agencée sur le circuit fermé de recyclage (6) de la section (I) se trouvant le plus en amont.

12. Installation selon une des revendications 1 à 11,
caractérisée en ce que l'entrée pour l'introduction du milieu aqueux (2) et du gaz contenant de l'oxygène ou de la solution (3) libérant de l'oxygène est prévue dans le fond du réacteur tubulaire (1) ou à proximité de celui-ci.

13. Installation selon une des revendications 1 à 12,
caractérisée en ce que la sortie pour l'évacuation du milieu aqueux traité (5) est prévue au bout de la section (II,III) se trouvant le plus en aval du réacteur tubulaire (1) ou à proximité de celui-ci.

14. Installation selon une des revendications 1 à 13,
caractérisée en ce que la première section (I) se trouvant le plus en amont présente, pour au moins deux des courants de fluide suivants, une entrée commune : le courant du milieu aqueux fraîchement amené, le courant de recyclage, et le courant du gaz contenant de l'oxygène ou de la solution libérant de l'oxygène.

15. Installation selon une des revendications 1 à 14,
caractérisée en ce qu'au moins une section du réacteur tubulaire (1) présente un agencement de parois de séparation (13,14) s'étendant en direction longitudinale, qui partage la section en deux ou plusieurs sous-sections (15) parallèles.

16. Installation selon une des revendications 1 à 15,
caractérisée en ce qu'au moins deux, en particulier toutes les sections (I,II,III) du réacteur tubulaire (1), présentent des boîtiers séparés, qui sont reliés ensemble, à chaque fois, par un conduit (16).

17. Installation selon une des revendications 1 à 16,
caractérisée en ce que toutes ou au moins deux sections (I,II) directement voisines du réacteur tubulaire (1) présentent un boîtier commun, les sections (I,II) dans la zone de transition étant séparées l'une de l'autre, à chaque fois, par un séparateur (17) qui permet un transfert de masse libre entre deux sections voisines (I,II), mais uniquement un transfert de moment angulaire limité.

18. Installation selon une des revendications 1 à 17,
caractérisée en ce que les volumes internes des sections individuelles (I,II,III) présentent, à chaque fois, des grandeurs différentes les uns par rapport aux autres.

19. Installation selon une des revendications 17 à 18,
caractérisée en ce que le séparateur (17) est constitué d'une ou plusieurs plaques perforées ou d'un ou plusieurs fonds en treillis, dont le diamètre est généralement égal au diamètre interne du réacteur tubulaire (1), les plaques perforées ou les fonds en treillis étant agencés généralement parallèlement les uns aux autres à un écartement inférieur à 20 cm et étant orientés généralement à angle droit par rapport à l'axe longitudinal du réacteur tubulaire (1).

20. Installation selon une des revendications 17 à 18,
caractérisée en ce que le séparateur (17) est réalisé sous forme de nid d'abeilles, dont le diamètre est sensiblement égal au diamètre interne du réacteur tubulaire (1), dont l'épaisseur est inférieure à 20 cm et qui est orienté généralement à angle droit par rapport à l'axe longitudinal du réacteur tubulaire (1).

21. Installation selon une des revendications 17 à 18,
caractérisée en ce que le séparateur (17) est constitué d'un dispositif de mélangeage gaz/liquide statique, dont l'épaisseur est petite par rapport au diamètre du réacteur tubulaire (1) et qui est orienté généralement à angle droit par rapport à l'axe longitudinal du réacteur tubulaire (1).

22. Installation selon une des revendications 1 à 21,
caractérisée en ce que la section (II) agencée derrière la section (I) se trouvant le plus en amont présente, à proximité de son extrémité se trouvant en amont, à chaque fois une entrée propre (18) pour introduire du gaz frais contenant de l'oxygène ou une solution de peroxyde d'hydrogène.

23. Installation selon une des revendications 1 à 22,
caractérisée en ce que l'entrée pour l'introduction du gaz frais contenant de l'oxygène ou de la solution de peroxyde d'hydrogène est prévue dans le circuit fermé de recyclage (6) de la section (I,II) respective.

24. Installation selon une des revendications 1 à 23,
caractérisée en ce que les moyens 14,10,11,12) pour disperser les bulles d'oxygène et pour réduire le remélangeage dans la phase liquide et/ou les séparateurs (17) pour l'oxydation des matières organiques et inorganiques pouvant être oxydées sont revêtus d'une matière catalytiquement active, le revêtement étant constitué, en particulier, d'un ou plusieurs composés du groupe des métaux Cr, Fe, Mn, Zn et/ou des oxydes de Ce, Cr, Co, Cu, Fe, V, Zn.

25. Installation selon une des revendications 1 à 24,
caractérisée en ce que la section (II ou III) se trouvant le plus en aval est réalisée comme réacteur à colonne à bulles, qui est traversé de bas en haut, dans le même sens, par le milieu aqueux et le gaz contenant de l'oxygène.

26. Procédé pour l'oxydation d'un milieu aqueux, qui contient des matières organiques et/ou inorganiques pouvant être oxydées, à température élevée et pression élevée, sans engendrer, de façon notable, de la vapeur d'eau dans un réacteur tubulaire qui est partagé en au moins deux sections montées l'une derrière l'autre et reliées l'une à l'autre, dans lesquelles le milieu aqueux est exposé à de l'oxygène gazeux, pour réduire le besoin d'oxygène chimique du milieu aqueux à un niveau souhaité prédéfini, le milieu aqueux et le gaz contenant de l'oxygène étant introduits dans la première section du réacteur tubulaire et traversant alors successivement les autres sections ou d'autres sections se trouvant en aval, en agissant, à chaque fois, sur le milieu aqueux au moins dans la section se trouvant le plus en amont, de façon à favoriser la dispersion des bulles d'oxygène dans le milieu aqueux, et le milieu aqueux traité étant prélevé de la dernière section se trouvant en aval,
caractérisé en ce que chaque section fonctionne de sorte que le degré du remélangeage dans la phase liquide dans cette section n'est pas plus grand que le degré du remélangeage dans les sections respectives agencées en amont, le degré du remélangeage dans la section se trouvant le plus en aval étant plus petit que dans la section se trouvant le plus en amont, et en ce que le milieu aqueux séjourne pendant une durée suffisamment longue dans la section respective jusqu'à ce que le besoin d'oxygène chimique soit réduit à une valeur souhaitée prédéfinie pour cette section.

27. Procédé selon la revendication 26,
caractérisé en ce que chaque section fonctionne de sorte que le degré du remélangeage dans cette section est plus petit que dans toutes les sections se trouvant en amont.

28. Procédé selon une des revendications 26 à 27,
caractérisé en ce qu'au moins la première section est raccordée à un circuit fermé de recyclage, à travers lequel une partie du mélange, traversant le réacteur, du milieu aqueux et de l'oxygène gazeux est ramenée au début de la section.

29. Procédé selon une des revendications 26 à 28,
caractérisé en ce que le procédé est mis en oeuvre dans un réacteur tubulaire comportant deux sections.

30. Procédé selon une des revendications 26 à 29,
caractérisé en ce que l'introduction du milieu aqueux d'une section se trouvant en amont dans la section voisine en aval, qui présente un boîtier séparé du boîtier de la section se trouvant en amont, est effectuée par l'intermédiaire d'un conduit séparé.

31. Procédé selon une des revendications 26 à 30,
caractérisé en ce que l'introduction du milieu aqueux d'une section se trouvant en amont dans la section voisine en aval et agencée dans un boîtier commun du réacteur tubulaire est influencée par l'utilisation de moyens de guidage d'écoulement, de sorte que l'écoulement du milieu aqueux n'a lieu essentiellement qu'en direction longitudinale du réacteur tubulaire et que d'autres directions d'écoulement sont évitées.

32. Procédé selon une des revendications 26 à 31,
caractérisé en ce que la température est maintenue dans la plage de 200 à 370°C et la pression dans la plage de 20 à 200 bars.

33. Procédé selon une des revendications 26 à 32,
caractérisé en ce que, à chaque fois, la plus grande partie de la quantité, traversant une section à circuit fermé de recyclage, de la solution aqueuse est ramenée au début de la section respective.

34. Procédé selon une des revendications 26 à 33,
caractérisé en ce que la dispersion des bulles d'oxygène est effectuée par impact continu du mélange s'écoulant du milieu aqueux et des bulles de gaz sur des corps de guidage d'écoulement, qui sont agencés dans la ou les sections.

35. Procédé selon une des revendications 26 à 34,
caractérisé en ce que de l'oxygène gazeux frais ou une solution de peroxyde d'hydrogène est introduit, de façon supplémentaire, dans au moins une section, en particulier dans toutes les sections disposées en aval de la première section, en particulier à proximité de la transition de la section voisine en amont par rapport à la section respective.

36. Procédé selon une des revendications 26 à 35,
caractérisé en ce que l'oxygène est amené sous forme d'ozone.

37. Procédé selon une des revendications 26 à 36,
caractérisé en ce que l'oxydation est effectuée en présence d'un catalyseur favorisant la réaction, en particulier un catalyseur qui est formé à partir de composés d'une ou plusieurs matières du groupe des métaux Cr, Fe, Mn, Zn et/ou des oxydes de Ce, Cr, Co, Cu, Fe, V, Zn.

38. Procédé selon la revendication 37,
caractérisé en ce que le catalyseur est introduit dans la première section comme suspension ou solution.
